# EUROPEAN PATENT SPECIFICATION

(11) **EP 3 879 598 B1**
(45) Date of publication and mention of the grant of the patent: **02.11.2022**
(21) Application number: 21160489.7
(22) Date of filing: 03.03.2021
(51) Int. Cl.: H01M 4/04, H01M 4/80, H01M 4/66

(54) **ELECTRODE FOR LITHIUM ION SECONDARY BATTERY, AND LITHIUM ION SECONDARY BATTERY**
ELEKTRODE FÜR LITHIUM-IONEN-SEKUNDÄRBATTERIE SOWIE LITHIUM-IONEN-SEKUNDÄRBATTERIE
ÉLECTRODE POUR BATTERIE SECONDAIRE LITHIUM-ION ET BATTERIE SECONDAIRE LITHIUM-ION

(30) Priority: 13.03.2020 JP 2020043839
(43) Date of publication of application: 15.09.2021
(73) Proprietor: HONDA MOTOR CO., LTD., Minato-ku Tokyo 107-8556 (JP)
(72) Inventor: TANAAMI, Kiyoshi, Wako-shi, Saitama 351-0193 (JP); ISOGAI, Yuji, Wako-shi, Saitama 351-0193 (JP); TAKAHASHI, Makiko, Wako-shi, Saitama 351-0193 (JP); AOYAGI, Shintaro, Wako-shi, Saitama 351-0193 (JP)
(74) Representative: Herzog, Markus

(56) References cited:
- WO-A1-2019/230322
- CN-A- 110 165 289
- US-A1- 2013 252 091
- US-A1- 2017 207 484

## Description

This application is based on and claims the benefit of priority from Japanese Patent Application No. 2020-043839, filed on 13 March 2020.

### BACKGROUND OF THE INVENTION

### Field of the Invention

The present invention relates to an electrode for a lithium ion secondary battery, and a lithium ion secondary battery using the electrode for a lithium ion secondary battery.

### Related Art

Conventionally, lithium ion secondary batteries have been widely available as secondary batteries having a high energy density. A lithium ion secondary battery has a structure including a positive electrode, a negative electrode, and a separator provided between the positive electrode and the negative electrode, and a liquid electrolyte (an electrolytic solution) being filled.

Such a lithium ion secondary battery has various requirements depending on the application of use. For example, for automobiles etc., volumetric energy density is required to be further increased.
Examples of method for this include a method for increasing a filling density of electrode active materials.

As the method for increasing a filling density of electrode active materials, use of a foamed metal as a current collector constituting a positive electrode layer and a negative electrode layer has been proposed (see Patent Documents 2 and 3).

The foamed metal has a network structure having uniform pore diameters, and having a large surface area.

By filling the inside of the network structure with an electrode mixture including an electrode active material, an amount of active materials per unit area of the electrode layer can be increased.

Patent Document 1: Japanese Unexamined Patent Application, Publication No. 2000-106154
Patent Document 2: Japanese Unexamined Patent Application, Publication No. H07-099058
Patent Document 3: Japanese Unexamined Patent Application, Publication No. H08-329954

US 2013/252091 A relates to a fabrication method for lithium ion battery electrode and the object thereof is to improve electrode active material utilization and electrode processability. A porous ionic conductive polymer binder layer has a function that close stack with other electrodes and lower cell impedance is achieved, and the porous ionic conductive polymer binder can prevent the electrode material peeling off from the current collector. As the porous ionic conductive polymer binder, PVDF, PTFE, PEO, PMA, and acrylate-based gel polymers are exemplified.

In US 2017/207484 A1, a layer of porous graphene structure basically serves as a cathode in an external electrochemical deposition chamber.

CN 110 165 289 A discloses a positive electrode of a lithium ion battery, in which a three-dimensional aluminum foam current collector covered with carbon is filled with a positive electrode material. The three-dimensional aluminum foam current collector 22 covered with carbon has a carbon layer, but does not disclose the thickness of the carbon layer.

### SUMMARY OF THE INVENTION

However, an electrode using a foamed metal as a current collector can produce an electrode having a higher basis weight than a coated electrode using a metal foil as a current collector, but a film thickness becomes larger.

Therefore, due to expansion of a negative electrode active material during charging, an electrolytic solution is extruded from an electrode layer, so that a phenomenon that an electrolytic solution becomes short occurs. Consequently, repeating charge and discharge deteriorate the capacity.

In particular, when a fully charged state is repeated, the capacity remarkably deteriorated.

Furthermore, since the electrode layer has a large film thickness, the permeability of an electrolytic solution is deteriorated, infiltration of the electrolytic solution into the inside of the electrode becomes insufficient. Therefore, the supply of anions and cations is insufficient so as to increase the internal resistance of the lithium ion secondary battery cell, also resulting in also a problem that the input/output characteristics (output density) of a battery is lowered.

The present invention has been made in view of the above, and has an object to provide an electrode for a lithium ion secondary battery being an electrode for obtaining a lithium ion secondary battery including a foamed metal as a current collector, having a high energy density, and further being capable of improving durability and input/output characteristics (output density), and a lithium ion secondary battery using the electrode for a lithium ion secondary battery.

The present inventors have extensively studied in order to solve the above-mentioned problem.

Then, the present inventors have found that when a porous coating layer is disposed on an electrode layer of the electrode for a lithium ion secondary battery using a current collector made of a foamed metal, an electrolytic solution extruded from the electrode layer due to expansion of a negative electrode active material can be absorbed and trapped in the coating layer, and as a result, it is possible to achieve a lithium ion secondary battery having improved durability and input/output characteristics (output density) with the energy density maintained high, and the present inventors have completed the present invention.

In other words, the present invention is an electrode for a lithium ion secondary battery according to claim 1.

The coating layer may be disposed on the electrode layer, at least on a surface that is in contact with a separator when a lithium ion secondary battery is formed.

The coating layer may be disposed on all surfaces in the electrode layer.

The porous foam may be a copper foam.

The electrode for a lithium ion secondary battery may be a negative electrode.

The current collector may be an aluminum foam.

The electrode for a lithium ion secondary battery may be a positive electrode.

Another aspect of the present invention is a lithium ion secondary battery including a positive electrode, a negative electrode, and a separator located between the positive electrode and the negative electrode, wherein at least one of the positive electrode and the negative electrode is the electrode for a lithium ion secondary battery mentioned above.

The negative electrode may include a negative electrode collector being a porous foam made of metal, and a negative electrode layer including the negative electrode collector filled with a negative electrode mixture, the negative electrode layer may have a porous negative electrode coating layer, and the negative electrode coating layer may be disposed on all surfaces in the negative electrode layer.

The positive electrode includes a positive current collector being a porous foam made of metal, and a positive electrode layer including the positive current collector filled with a positive electrode mixture. The positive electrode layer may have a porous positive electrode coating layer, and the positive electrode coating layer may be disposed on a surface in contact with the separator in the positive electrode layer.

According to the electrode for a lithium ion secondary battery of the present invention, it is possible to obtain a lithium ion secondary battery having a high energy density, and having improved durability and input-output property.

### BRIEF DESCRIPTION OF THE DRAWINGS

FIG. 1A is a sectional view showing an electrode for a lithium ion secondary battery in accordance with one embodiment of the present invention.
FIG. 1B is a sectional view showing an electrode for a lithium ion secondary battery in accordance with one embodiment of the present invention.
FIG. 1C is a sectional view of an electrode for a lithium ion secondary battery in accordance with one embodiment of the present invention.
FIG. 2A is a sectional view of an electrode for a lithium ion secondary battery in accordance with one embodiment of the present invention.
FIG. 2B is a sectional view of an electrode for a lithium ion secondary battery in accordance with one embodiment of the present invention.
FIG. 2C is a sectional view of an electrode for a lithium ion secondary battery in accordance with one embodiment of the present invention.
FIG. 3 is a sectional view of an electrode for a lithium ion secondary battery produced in Example 1.
FIG. 4 is a sectional view of an electrode for a lithium ion secondary battery produced in Example 2.
FIG. 5 is a sectional view of an electrode laminate for a lithium ion secondary battery produced in Example 3.
FIG. 6 is a graph showing a capacity retention rate every 200 cycles in the lithium ion secondary battery produced in Examples and Comparative Examples.
FIG. 7 is a graph showing a 0.1 s resistance change rate every 200 cycles in the lithium ion secondary battery produced in Examples and Comparative Examples.
FIG. 8 is a graph showing a 1 s resistance change rate every 200 cycles in the lithium ion secondary battery produced in Examples and Comparative Examples.
FIG. 9 is a graph showing a 10 s resistance change rate every 200 cycles in the lithium ion secondary battery produced in Examples and Comparative Examples.

### DETAILED DESCRIPTION OF THE INVENTION

Hereinafter, embodiments of the present invention will be described with reference to drawings.

### <Electrode for Lithium Ion Secondary Battery>

The electrode for a lithium ion secondary battery of the present invention includes a current collector being a porous foam made of metal, and an electrode layer including the current collector filled with an electrode mixture.

The electrode layer has a porous coating layer.

Batteries to which the electrode for a lithium ion secondary battery of the present invention can be applied are not particularly limited as long as batteries use a liquid electrolytic solution.

Furthermore, the electrode for a lithium ion secondary battery of the present invention can be used for a positive electrode or a negative electrode or for both electrodes in lithium ion secondary battery without any problems.

In a case where a positive electrode and a negative electrode compared with each other, an active material used for a negative electrode is largely expanded, and too much electrolytic solution is extruded from the electrode layer, and therefore, the electrode for a lithium ion secondary battery of the present invention can have a higher effect when it is used for a negative electrode.

Furthermore, a structure of the electrode for a lithium ion secondary battery of the present invention is not particularly limited, and may be a laminated type or a wound type.

### [Current Collector]

A current collector constituting the electrode for a lithium ion secondary battery of the present invention is a porous foam made of metal.

The porous foam made of metal is not particularly limited as long as it is a metal porous material having space by a foam.

The foamed metal body has a network structure and has a large surface area.

When the porous foam made of metal is used as the current collector, since the inside the network structure can be filled with an electrode mixture including an electrode active material, an amount of active materials per unit area of the electrode layer can be increased. As a result, the volumetric energy density of the lithium ion secondary battery can be improved.

Furthermore, since the electrode mixture can be fixed easily, a thickness of the electrode mixture layer can be increased without necessity of increasing the viscosity of the coating slurry serving as the electrode mixture.

Furthermore, a binding agent made of an organic polymer compound that has been needed for increasing the viscosity can be reduced.

Therefore, as compared with an electrode using a conventional metal foil as the current collector, a thickness of the electrode mixture layer can be increased. As a result, capacity per unit area of the electrode can be increased, and higher capacity of the lithium ion secondary battery can be achieved.

Examples of the porous foam made of metal include nickel, aluminum, stainless steel, titanium, copper, silver, and the like. Among them, as a current collector constituting a positive electrode, an aluminum foam is preferably used; as a current collector constituting a negative electrode, a copper foam or a stainless steel foam are preferably used.

### [Electrode Layer]

An electrode layer in the electrode for a lithium ion secondary battery of the present invention includes a current collector being a porous foam made of metal, which is filled with an electrode mixture.

A thickness of the electrode layer is not particularly limited, but the electrode for a lithium ion secondary battery of the present invention uses a porous foam made of metal as the current collector, an electrode layer having a large thickness can be formed.

As a result, an active material amount per unit area of the electrode layer is increased, and a battery having a large energy density can be obtained.

A thickness of the electrode layer in the electrode for a lithium ion secondary battery of the present invention is, for example, 200 to 400 µm.

### [Electrode Mixture]

An electrode mixture constituting an electrode layer of the present invention includes at least an electrode active material.

The electrode mixture that can be applied to the present invention may include arbitrary other components as long as the electrode mixture includes an electrode active material as an essential component. Other components are not particularly limited, and may use components to be used for producing a lithium ion secondary battery can be used. Examples of the other components include a solid electrolyte, a conductive auxiliary agent, a binding agent, and the like.

### (Positive electrode mixture)

A positive electrode mixture constituting a positive electrode layer contains at least a positive electrode active material, and may contain other components such as a solid electrolyte, a conductive auxiliary agent, and a binding agent.

The positive electrode active material is not particularly limited as long as it can absorb and release lithium ions. Examples thereof include LiCoO₂, Li(Ni_{5/10}Co_{2/10}Mn_{3/10})O₂, Li(Ni_{6/10}Co_{2/10}Mn_{2/10})O₂, Li(Ni_{8/10}Co_{1/10}Mn_{1/10})O₂, Li(Ni_{0.8}Co_{0.15}Al_{0.05})O₂, Li(Ni_{1/6}Co_{4/6}Mn_{1/6})O₂, Li(Ni_{1/3}Co_{1/3}Mn_{1/3})O₂, LiCoO₄, LiMn₂O₄, LiNiO₂, LiFePO₄, lithium sulfide, sulfur, and the like.

### (Negative electrode mixture)

A negative electrode mixture constituting an electrode layer of negative electrode contains at least a negative electrode active material, and may contain other components such as a solid electrolyte, a conductive auxiliary agent, and a binding agent.

The negative electrode active material is not particularly limited as long as it can absorb and release lithium ions. Examples thereof include carbon materials such as metallic lithium, a lithium alloy, metal oxide, metal sulfide, metal nitride, Si, SiO, an artificial graphite, natural graphite, hard carbon, and soft carbon.

### [Coating layer]

The electrode layer in the electrode for a lithium ion secondary battery of the present invention includes a porous coating layer. When the electrode layer includes a porous coating layer, an electrolytic solution extruded from the electrode layer due to expansion of a negative electrode active material during charging can be absorbed and trapped in the coating layer.

By absorbing and trapping the electrolytic solution in the coating layer, a phenomenon that the electrolytic solution runs out and drying up of liquid can be suppressed even if charge and discharge are repeated.

In particular, in a case of repeating fully charging and discharging, deterioration of the capacity can be remarkably suppressed.

As a result, it is possible to achieve a lithium ion secondary battery durability and input/output characteristics (output density) having improved with the energy density maintained high.

### (Material of coating layer)

A material forming a coating layer is a porous material.

The porosity of the porous material is preferably 30 to 80%.

When the porosity is 30 to 80%, the electrolytic solution released from the negative electrode during charging can be sufficiently captured.

Examples of the porous material forming the coating layer include carbon black and activated carbon.

Carbon black is preferable because particles become a structure to form a microstructure, and therefore an electrolytic solution can be replenished. Activated carbon is preferable because it has high specific surface area, and therefore the electrolytic solution can be replenished.

### (Thickness of coating layer)

A thickness of the coating layer of the negative electrode, is 1 to 20 µm, and a thickness of the coating layer of the positive electrode is 1 to 10 µm.

As the thickness of the coating layer of the negative electrode is 1 to 20 µm, the durability can be improved without considerably increasing the cell resistance value.

When the thickness of the coating layer of the positive electrode is 1 to 10 µm, an electrolytic solution moving through the separator can be sufficiently captured.

### (Disposition of coating layer)

The coating layer may be formed at the positive electrode or the negative electrode or both electrodes. However, the active material used for the negative electrode expands greatly during charging, and the electrolyte is extruded from the electrode layer. Therefore, when the coating layer is formed on the negative electrode, more effect can be obtained.

Furthermore, it is preferable that the coating layer is disposed on the surface in contact with the separator in the electrode layer, when at least a lithium ion secondary battery is formed.

The electrolytic solution can be trapped in a center portion of the cell.

Note here that in an embodiment in which a negative electrode layer includes a coating layer, the negative electrode coating layer is preferably disposed on all surfaces of the negative electrode layer.

In the negative electrode layer, since much electrolyte is extruded due to expansion of the negative electrode active material, by disposing the coating layer on all surfaces of the negative electrode layer, it is possible to trap the electrolytic solution efficiently from all the directions.

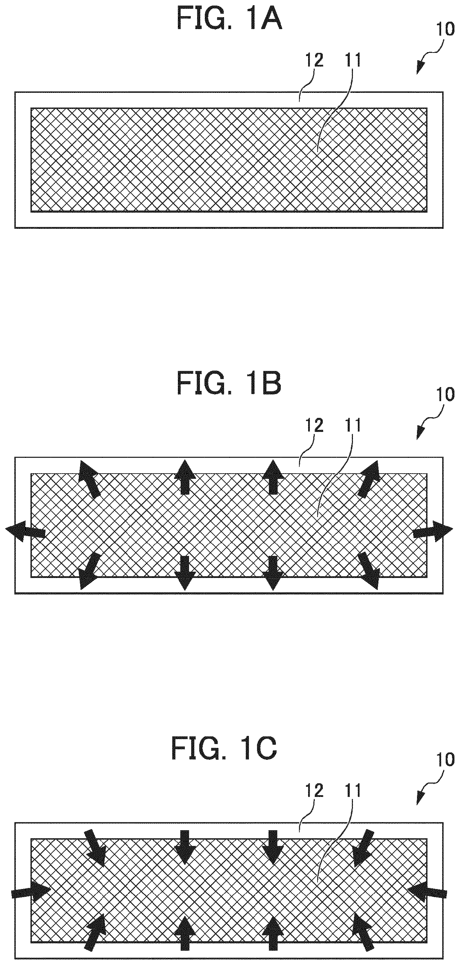

FIGs. 1A to 1C show a sectional view of an electrode for a lithium ion secondary battery in accordance with one embodiment of the present invention.

In the electrode 10 for a lithium ion secondary battery shown in FIGs. 1A to 1C, a coating layer 12 is disposed on all surfaces of the electrode layer 11.

Therefore, the electrode 10 for a lithium ion secondary battery shown in FIGs. 1A to 1C is preferably a negative electrode.

Arrows shown in FIGs. 1A to 1C show movement of the electrolytic solution.

FIG. 1A shows a negative electrode for a lithium ion secondary battery immediately after production.

Since a negative electrode active material is expanded during charging, an electrolytic solution is extruded from an electrode layer as shown in FIG. 1B. However, the coating layer 12 traps the electrolytic solution, making it possible to suppress movement of the electrolytic solution toward a space of the cell or a positive electrode side.

Furthermore, as shown in FIG. 1C, since the electrolytic solution held by the coating layer 12 returns to the electrode layer 11 quickly during discharging, the battery reaction can be allowed to proceed sufficiently, and deterioration of the capacity can be suppressed.

Furthermore, it is further preferable that the present invention has an embodiment in which the positive electrode layer also includes a porous coating layer in addition to the embodiment in which the negative electrode layer includes the coating layer.

When the coating layer is formed on the positive electrode layer, the coating layer is disposed on the surface in contact with the separator.

When the coating layer is disposed on the surface in contact with the separator, the electrolytic solution that cannot be absorbed only by the negative electrode side can be trapped also by the positive electrode side.

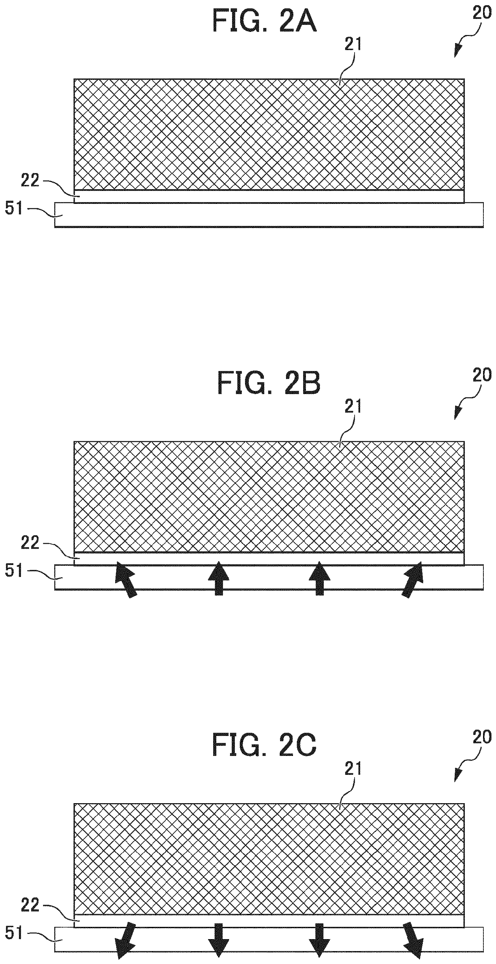

FIGs. 2A to 2C respectively show a sectional view of the electrode for a lithium ion secondary battery in accordance with one embodiment of the present invention.

In the electrode 20 for a lithium ion secondary battery shown in FIGs. 2A to 2C, a coating layer 22 is disposed on a surface in contact with the separator 51 in the electrode layer 21.

Therefore, the electrode 20 for a lithium ion secondary battery shown in FIGs. 2A to 2C is preferably a positive electrode.

Arrows shown in FIGs. 2A to 2C show movement of the electrolytic solution.

FIG. 2A shows a negative and positive electrode for a lithium ion secondary battery immediately after production.

Since a negative electrode active material is expanded during charging, an electrolytic solution is extruded from the negative electrode side, reaches the positive electrode side through the separator as shown in FIG. 2B. However, the coating layer 22 at the positive electrode side can trap the electrolytic solution. Furthermore, as shown in FIG. 2C, since the electrolytic solution held by the coating layer 22 returns to the negative electrode side through the separator 51 quickly during discharging, the battery reaction can be allowed to proceed sufficiently, and deterioration of the capacity can be suppressed.

### <Method for Producing Electrode for Lithium Ion Secondary Battery>

The method for producing electrode for lithium ion secondary battery according to the present invention is not particularly limited, and can use usual methods in the field of this technology.

The electrode for a lithium ion secondary battery of the present invention has an electrode layer including a current collector including a porous foam made of metal and being filled with an electrode mixture. The electrode layer includes a plurality of electrode divided products.

### (Method for filling electrode mixture)

A method for filling the current collector with an electrode mixture is not particularly limited, and examples of the method include a method for filling the inside of a network structure of the current collector with slurry including an electrode mixture using a plunger-type die coater, while pressure is applied.

### (Method for forming coating layer)

The method for forming a porous coating layer on a desired surface of the formed electrode layer is not particularly limited, and examples of the method include dipping coating, plunger-type die coating, die coating, comma coating, and blade coating.

After the electrode mixture is filled to form a coating layer, an electrode for a lithium ion secondary battery can be obtained by applying usual methods in the field of this technology.

For example, the current collector filled with an electrode mixture is dried, and then is pressed to obtain an electrode for a lithium ion secondary battery.

Pressing can improve the density of the electrode mixture, and can adjust so as to have a desired density.

### <Lithium Ion Secondary Battery>

A lithium ion secondary battery of the present invention includes a positive electrode, a negative electrode, and a separator or a solid electrolyte layer located between the positive electrode and the negative electrode.

In the lithium ion secondary battery of the present invention, at least one of the positive electrode and the negative electrode is the above-mentioned electrode for a lithium ion secondary battery of the present invention.

In other words, in the lithium ion secondary battery of the present invention, the positive electrode may be the electrode for a lithium ion secondary battery of the present invention or the negative electrode may be the electrode for a lithium ion secondary battery of the present invention, or both electrodes may be the electrode for a lithium ion secondary battery of the present invention.

However, an active material used for a negative electrode is greatly expanded at the time of charging, and more electrolytic solution is extruded from the electrode layer, and therefore, when the electrode for a lithium ion secondary battery of the present invention is used for a negative electrode, a higher effect can be obtained.

Therefore, it is preferable that the lithium ion secondary battery of the present invention has an embodiment in which the negative electrode layer includes a porous negative electrode coating layer.

Furthermore, in the negative electrode layer, it is preferable that the negative electrode coating layer is disposed on all surfaces.

It is further preferable that the lithium ion secondary battery of the present invention has an embodiment in which the positive electrode layer also includes a porous positive electrode coating layer in addition to an embodiment in which the negative electrode layer includes a porous negative electrode coating layer.

In particular, in the positive electrode layer, when the positive electrode coating layer is disposed on the surface in contact with the separator, an electrolytic solution that cannot be absorbed only by a negative electrode side can be trapped by a positive electrode side.

### [Positive Electrode and Negative Electrode]

In the lithium ion secondary battery of the present invention, a configuration of the positive electrode and the negative electrode in which the electrode for a lithium ion secondary battery of the present invention is not applied is not particularly limited, and any configuration may be used as long as it functions as the positive electrode and the negative electrode of the lithium ion secondary battery.

A positive electrode and a negative electrode constituting a lithium ion secondary battery can constitute any batteries by selecting two types of materials capable of constituting an electrode, comparing the charge and discharge potentials of two types of compounds with each other, and using one showing a noble potential as a positive electrode and one showing a base potential as a negative electrode.

### [Separator]

When the lithium ion secondary battery of the present invention includes a separator, the separator is located between the positive electrode and the negative electrode.

The material, thickness, or the like, is not particularly limited, and known separators capable of being used for the lithium ion secondary battery can be applied.

### EXAMPLES

Hereinafter, Examples etc. of the present invention will be described, but the present invention is not limited to these Examples etc.

### <Example 1>

### [Production of Negative Electrode for Lithium Ion Secondary Battery]

As a current collector, a copper foam having a thickness of 1.0 mm, porosity of 95%, the number of cells of 46 to 50 cells/inch, a pore diameter of 0.5 mm, and a specific surface area of 5000 m²/m³ was prepared.

### (Preparation of negative electrode mixture slurry)

A mixture obtained by mixing 96.5% by mass of natural graphite, 1% by mass of carbon black as a conductive auxiliary agent, 1.5% by mass of styrene-butadiene rubber (SBR) as a binding agent, and 1% by mass of sodium carboxymethyl cellulose (CMC) as a thickener was dispersed in an appropriate amount of distilled water to produce a negative electrode mixture slurry.

### (Formation of electrode layer of negative electrode)

The produced negative electrode mixture slurry was applied on a current collector using a die coater so that the coated amount was 45 mg/cm².

The coated slurry was dried in a vacuum at 120°C for 12 hours.

### (Formation negative electrode coating layer)

A surface of the produced electrode layer of negative electrode was coated by dipping in 20% by mass of carbon black solution.

The obtained product was dried in a vacuum at 120°C for one hour. Next, roll press was performed at a pressure of 10 ton to produce a negative electrode for a lithium ion secondary battery.

The produced negative electrode coating layer had a thickness of 15 µm.

The electrode layer in the obtained negative electrode for a lithium ion secondary battery had a basis weight of 45 mg/cm², a density of 1.5 g/cm³, a thickness of 230 µm.

The produced negative electrode was punched into a size of 3 cm × 4 cm.

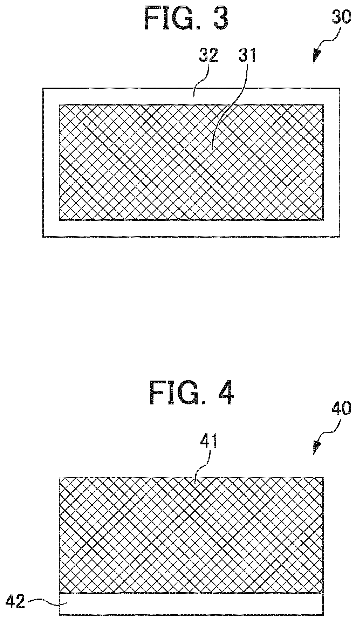

FIG. 3 is a sectional view showing the negative electrode for a lithium ion secondary battery formed in Example 1.

The negative electrode 30 for a lithium ion secondary battery produced in Example 1 includes a negative electrode coating layer 32 on all surfaces of the negative electrode layer 31.

### [Production of Positive Electrode for Lithium Ion Secondary Battery]

As a current collector, an aluminum foam having a thickness of 1.0 mm, porosity of 95%, the number of cells of 46 to 50 cells/inch, a pore diameter of 0.5 mm, and a specific surface area of 5000 m²/m³ was prepared.

### (Preparation of positive electrode mixture slurry)

As the positive electrode active material, LiNi_{0.5}Co_{0.2}Mn_{0.3}O₂ was prepared.

A mixture obtained by mixing 94% by mass of positive electrode active material, 4% by mass of carbon black as a conductive auxiliary agent, and 2% by mass of polyvinylidene fluoride (PVDF) as a binding agent was dispersed in an appropriate amount of N-methyl-2-pyrrolidone (NMP) to produce a positive electrode mixture slurry.

### (Formation of positive electrode layer)

The produced positive electrode mixture slurry was applied on a current collector using a plunger-type die coater so that the coated amount was 90 mg/cm².

Then, the obtained product was dried in a vacuum at 120°C for 12 hours, and then roll-pressed at a pressure of 15 ton to produce a positive electrode for a lithium ion secondary battery.

The obtained electrode layer of the positive electrode for a lithium ion secondary battery had a basis weight of 90 mg/cm² and a density of 3.2 g/cm³.

The produced positive electrode was punched into a size of 3 cm × 4 cm, and the punched electrode was used as it is without forming a positive electrode coating layer.

### [Production of Lithium Ion Secondary Battery]

As a separator, 25-µm microporous film as three-layered laminated product of polypropylene/polyethylene/polypropylene was prepared and punched in a size of 4 cm × 5 cm.

The above-produced laminated product including the positive electrode, the negative electrode, and the separator disposed therebetween was inserted into in a bag processed by heat-sealing an aluminum laminate for a secondary battery so as to produce a laminate cell.

As the electrolytic solution, a solution in which 1.2 mol of LiPF₆ had been dissolved in a solvent obtained by mixing ethylene carbonate, dimethyl carbonate, and ethyl methyl carbonate at a volume ratio of 3:4:3 was prepared, and the solution was injected into the above-mentioned laminate cell to produce a lithium ion secondary battery.

### <Example 2>

### [Production of Negative Electrode for Lithium Ion Secondary Battery]

The electrode layer of the negative electrode was formed in the same manner as in Example 1, and used as a negative electrode for a lithium ion secondary battery without forming a negative electrode coating layer.

### [Production of Positive Electrode for Lithium Ion Secondary Battery]

As a current collector, an aluminum foam having a thickness of 1.0 mm, porosity of 95%, the number of cells of 46 to 50 cells/inch, a pore diameter of 0.5 mm, and specific surface area of 5000 m²/m³ was prepared.

### (Preparation of positive electrode mixture slurry)

Positive electrode mixture slurry was produced in the same manner as in Example 1.

### (Formation of positive electrode coating layer)

To one side of the produced electrode layer of the positive electrode, the surface was coated with 20% by mass carbon black solution by blade coating.

The coated surface was dried in a vacuum at 120°C for one hour.

Then, roll pressing was performed at a pressure of 15 ton to produce a positive electrode for a lithium ion secondary battery.

The produced positive electrode coating layer had a thickness of 10 µm.

### (Formation of positive electrode mixture layer)

A positive electrode mixture layer was produced and punched into a size of 3 cm × 4 cm in the same manner as in Example 1.

FIG. 4 is a sectional view showing the positive electrode for a lithium ion secondary battery produced in Example 2.

The positive electrode 40 for a lithium ion secondary battery produced in Example 2 includes a positive electrode coating layer 42 on only one surface of a positive electrode layer 41.

Then, a lithium ion secondary battery was assembled such that the positive electrode coating layer 42 is brought into contact with a separator.

### [Production of Lithium Ion Secondary Battery]

A lithium ion secondary battery was produced in the same manner as in Example 1 except that assembly was performed using the above-produced positive electrode and negative electrode so that the positive electrode coating layer was brought into contact with a separator.

### <Example 3>

### [Production of Negative Electrode for Lithium Ion Secondary Battery]

A negative electrode for a lithium ion secondary battery including a negative electrode coating layer was produced in the same manner as in Example 1.

### [Production of Positive Electrode for Lithium Ion Secondary Battery]

A positive electrode for a lithium ion secondary battery including a positive electrode coating layer was produced in the same manner as in Example 2.

### [Production of Lithium Ion Secondary Battery]

A lithium ion secondary battery was produced in the same manner as in Example 1 except that assembly was performed using the above-produced positive electrode and negative electrode so that the positive electrode coating layer was brought into contact with a separator.

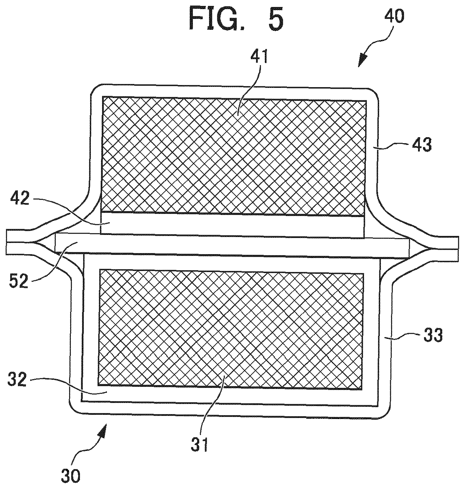

FIG. 5 is a sectional view showing the lithium ion secondary battery produced in Example 3.

The negative electrode 30 for a lithium ion secondary battery produced in Example 3 includes the negative electrode coating layer 32 on all surfaces of the negative electrode layer 31.

Furthermore, the positive electrode 40 for a lithium ion secondary battery includes a positive electrode coating layer 42 only one surface of the positive electrode layer 41, and the positive electrode coating layer 42 is in contact with the separator 52.

Furthermore, the positive electrode, the separator, and the negative electrode are sealed by an outer body 33 and the outer body 43, including an aluminum foil, as a laminate film capable of heat sealing.

### <Comparative Example 1>

### [Production of Negative Electrode for Lithium Ion Secondary Battery]

A negative electrode for a lithium ion secondary battery, which does not have a negative electrode coating layer, was produced in the same manner as in Example 2.

### [Production of Positive Electrode for Lithium Ion Secondary Battery]

A positive electrode for a lithium ion secondary battery, which does not have a positive electrode coating layer, was produced in the same manner as in Example 1.

### [Production of Lithium Ion Secondary Battery]

A lithium ion secondary battery was produced in the same manner as in Example 1 except that the above-produced positive electrode and the negative electrode were used.

### <Evaluation of Lithium Ion Secondary Battery>

Lithium ion secondary batteries obtained in Examples 1 to 3, and Comparative Example 1 were subjected to the following evaluation.

### [Initial Discharge Capacity]

The lithium ion secondary batteries were left stand at the measurement temperature (25°C) for three hours, and constant current charge was performed at 0.33C up to 4.2 V, then, constant voltage charge was performed at a voltage of 4.2 V for 5 hours, left stand for 30 minutes, then discharge was performed at a discharge rate of 0.33 C up to 2.5 V, and discharge capacity was measured.

The obtained discharge capacity was made to be initial discharge capacity.

### [Initial Cell Resistance]

A lithium ion secondary battery after measurement of the initial discharge capacity was adjusted to a charge level (SOC (State of Charge)) of 50%.

Next, discharge was performed for 10 seconds at a current value of 0.2 C, and a voltage after 10 seconds was measured.

Then, each voltage with respect to a current of 0.2 C, after 0.1 seconds, 1 second, and 10 seconds, were plotted with the abscissa as a current value and the ordinate as a voltage.

Next, after being left stand for 10 minutes, auxiliary charge was performed to return SOC to 50%, and then left stand for 10 minutes. Next, for each C rate at 0.5 C, 1.0 C, 1.5 C, 2.0 C, and 2.5 C, the same operations as mentioned above were performed, and voltages with respect to the current at each C rate, after 0.1 seconds, 1 second, and 10 seconds, were plotted.

The gradient of the approximate straight line obtained from each plot was defined as the internal cell resistance of the lithium ion secondary battery.

### [Discharge Capacity in Durability Test]

As a charge and discharge cycle durability test, 200 cycles of operations were performed. Each cycle includes performing a constant current charge at 0.6 C up to 4.2 V in a constant temperature bath at 45°C, then performing constant voltage charge at a voltage of 4.2 V for 5 hours or until a current became 0.1 C, being left stand for 30 minutes, performing a constant current discharge at a discharge rate of 0.6C up to 2.5 V, and being left stand for 30 minutes.

After completion of 200 cycles, the constant temperature bath was set at 25°C, and left stand in a state of discharge at 2.5 V for 24 hours, and then, similar to the measurement of the initial discharge capacity, the discharge capacity was measured.

The operation was repeated every 200 cycles, and measurement was performed up to 600 cycles.

### [Cell Resistance after Endurance]

After completion of 600 cycles, a charge level (SOC (State of Charge)) was adjusted to 50% and the cell resistance after endurance was measured by the same measurement method for measurement of the initial cell resistance.

### [Capacity Retention Rate]

Discharge capacity for every 200 cycles with respect to the initial discharge capacity was obtained, the discharge capacity was made to be a capacity retention rate for each cycle.

### [Resistance Change Rate]

Cell resistance with respect to the initial cell resistance after 600 cycles endurance was obtained, and the obtained cell resistance was made to be a resistance change rate.

Table 1 shows various measurement results of lithium ion secondary battery produced in Examples and Comparative Examples.

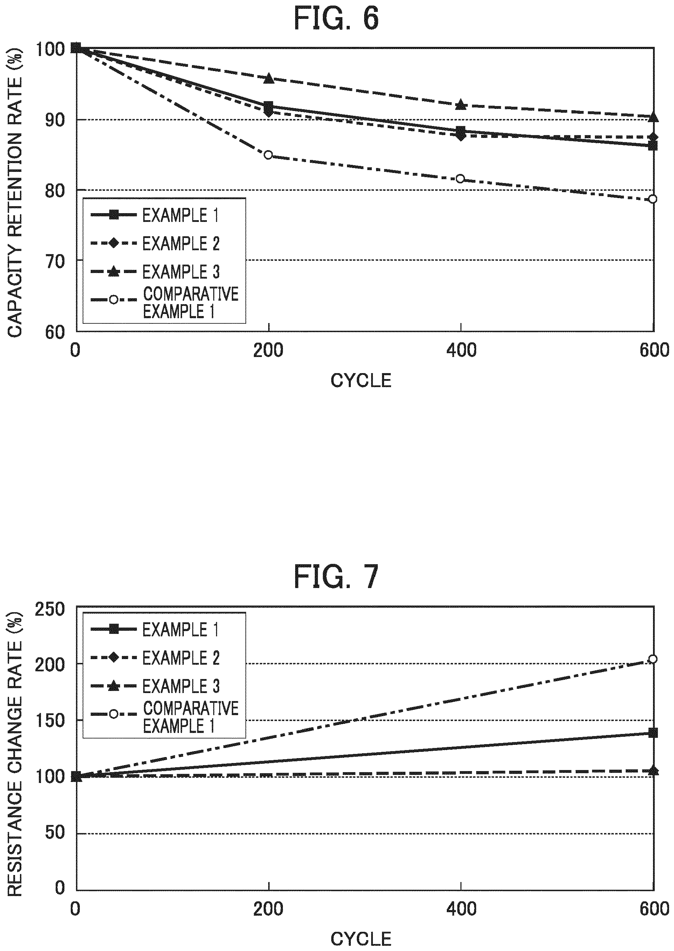

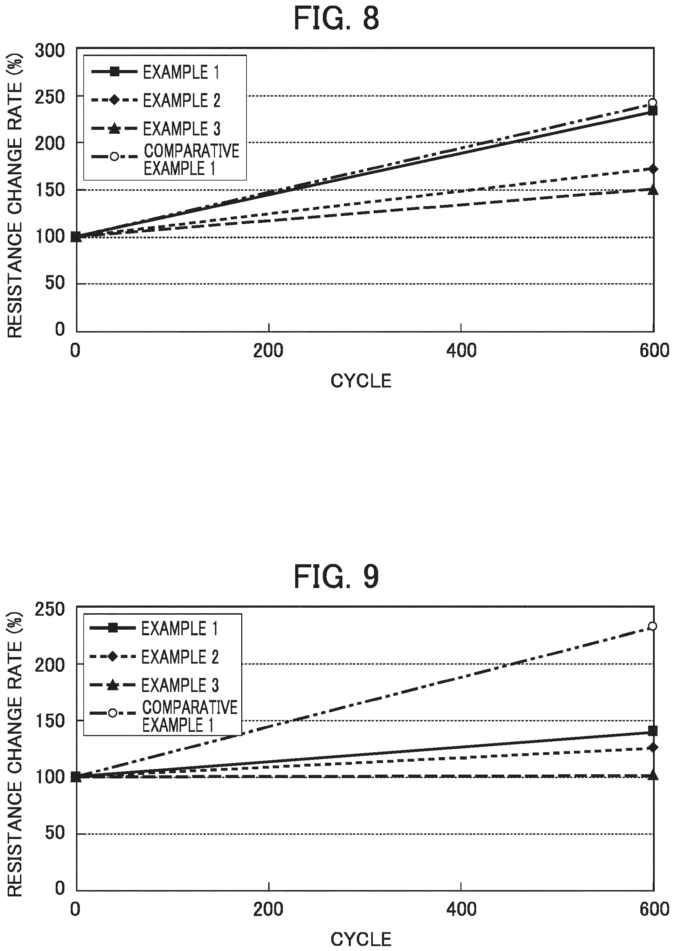

FIG. 6 shows capacity retention rate of every 200 cycles of lithium ion secondary batteries produced in Examples and Comparative Examples. FIG. 7 shows 0.1 s resistance change rate of lithium ion secondary batteries produced in Examples and Comparative Examples. FIG. 8 shows 1 s resistance change rate. FIG. 9 shows 10s resistance change rate.

**[Table 1]**

| | | Example 1 | Example 2 | Example 3 | Comparative Example 1 |
|---|---|---|---|---|---|
| Initial discharge capacity (mAh) | | 150 | 145 | 143 | 146 |
| Initial cell resistance (Ω) | 0.1s: Electronic resistance | 701 | 603 | 575 | 744 |
| | 1s: Reaction resistance | 124 | 157 | 83 | 172 |
| | 10s: Ion diffusion resistance | 167 | 157 | 172 | 148 |
| | Total | 992 | 917 | 831 | 1064 |
| Discharge capacity test after endurance | Discharge capacity after 200 cycles (mAh) | 138 | 131 | 137 | 124 |
| | Capacity retention rate after 200 cycles (%) | 91.7 | 90.9 | 95.7 | 84.8 |
| | Discharge capacity after 400 cycles (mAh) | 133 | 127 | 131 | 119 |
| | Capacity retention rate after 400 cycles (%) | 88.2 | 87.6 | 92.0 | 81.4 |
| | Discharge capacity after 600 cycles (mAh) | 129 | 126 | 129 | 115 |
| | Capacity retention rate after 600 cycles (%) | 86.1 | 87.4 | 90.3 | 78.5 |
| Cell resistance teat after endurance | 0.1s: Electronic resistance | 968 | 636 | 608 | 1510 |
| | 0.1s: Electronic resistance chanae rate (%) | 138.0 | 105.4 | 105.7 | 202.9 |
| | 1s: Reaction resistance | 289 | 269 | 125 | 415 |
| | 1s: Electronic resistance chanae rate (%) | 232.5 | 171.7 | 150.1 | 241.1 |
| | 10s: Ion diffusion resistance | 233 | 197 | 175 | 343 |
| | 10s: Electronic resistance chanae rate (%) | 139.9 | 125.5 | 101.6 | 231.7 |

As shown in FIG. 6, the capacity retention rate for every 200 cycles of the batteries of Examples 1 to 3 shows higher values as the number of cycles are increased as compared with the battery of Comparative Example 1.

In other words, use of the battery using the electrode for a lithium ion secondary battery of the present invention including an electrode layer having a porous coating layer improved durability.

As shown in FIGs. 7 to 9, increase in the resistance change rate of the batteries of Example 1 to 3 was suppressed as compared with the battery of Comparative Example 1.

In other words, in the batteries using the electrode for a lithium ion secondary battery of the present invention including an electrode layer having a porous coating layer, durability was improved.

To provide an electrode for a lithium ion secondary battery being an electrode for obtaining a lithium ion secondary battery including a foamed metal as a current collector and having a high energy density, and further capable of improving durability and input/output characteristics (output density), and a lithium ion secondary battery using the electrode for a lithium ion secondary battery.

A porous coating layer is disposed on an electrode layer of the electrode for a lithium ion secondary battery using a current collector made of a foamed metal, an electrolytic solution extruded from the electrode layer due to expansion of a negative electrode active material can be absorbed and trapped in the coating layer.

### EXPLANATION OF REFERENCE NUMERALS

10, 20 Electrode
11, 21 Electrode layer
12, 22 Coating layer
51 Separator
30 Negative electrode
31 Negative electrode layer
32 Negative electrode coating layer
33 Outer body
40 Positive electrode
41 Positive electrode layer
42 Positive electrode coating layer
43 Outer body
51, 52 Separator

## Claims

1. An electrode for a lithium ion secondary battery,
comprising a current collector being a porous foam made of metal, and an electrode layer (11, 21, 31, 41) comprising the current collector filled with an electrode mixture,
wherein the electrode layer comprises a porous coating layer (12, 22, 32, 42), the coating layer is formed of at least one of carbon black and activated carbon, and
the coating layer has a thickness of 1 to 20 µm when it is comprised in the negative electrode and 1 to 10 µm when it is comprised in the positive electrode.

2. The electrode for a lithium ion secondary battery according to claim 1, wherein the coating layer (12, 22, 32, 42) is disposed at least on a surface of the electrode layer, with the surface being in contact with a separator (51) when a lithium ion secondary battery is formed.

3. The electrode for a lithium ion secondary battery according to claim 1, wherein the coating layer is disposed on all surfaces in the electrode layer.

4. The electrode for a lithium ion secondary battery according to any one of claims 1 to 3, wherein the porous foam is a copper foam.

5. The electrode for a lithium ion secondary battery according to any one of claims 1 to 4, wherein the electrode for a lithium ion secondary battery is a negative electrode (30).

6. The electrode for a lithium ion secondary battery according to any one of claims 1 to 3, wherein the current collector is an aluminum foam.

7. The electrode for a lithium ion secondary battery according to any one of claims 1 to 3 and 6, wherein the electrode for a lithium ion secondary battery is a positive electrode (40) .

8. A lithium ion secondary battery comprising a positive electrode, a negative electrode, and a separator located between the positive electrode and the negative electrode(30),
wherein at least one of the positive electrode (40) and the negative electrode (30) is the electrode for a lithium ion secondary battery according to any one of claims 1 to 7.

9. The lithium ion secondary battery according to claim 8,
wherein the negative electrode (30) comprises a negative electrode collector being a porous foam made of metal, and a negative electrode layer (31) comprising the negative electrode collector filled with a negative electrode mixture,
the negative electrode layer has a porous negative electrode coating layer, and the negative electrode coating layer is disposed on all surfaces in the negative electrode layer.

10. The electrode for a lithium ion secondary battery according to claim 9,
wherein the positive electrode (40) comprises a positive current collector being a porous foam made of metal, and a positive electrode layer (41) comprising the positive current collector filled with a positive electrode mixture,
the positive electrode layer has a porous positive electrode coating layer, and the positive electrode coating layer is disposed on a surface in contact with the separator in the positive electrode layer.

## Patentansprüche

1. Elektrode für eine Lithiumionen-Sekundärbatterie, umfassend einen Stromsammler, der ein aus Metall hergestellter poröser Schaum ist, und eine Elektrodenlage (11, 21, 31, 41), die den mit einem Elektrodengemisch gefüllten Stromsammler aufweist,
wobei die Elektrodenlage eine poröse Beschichtungslage (12, 22, 32, 42) aufweist, die Beschichtungslage aus Ruß und/oder Aktivkohle gebildet ist, und die Beschichtungslage eine Dicke von 1 bis 20 µm hat, wenn sie in der negativen Elektrode vorgesehen ist, und 1 bis 10 µm, wenn sie in der positiven Elektrode vorgesehen ist.

2. Die Elektrode für eine Lithiumionen-Sekundärbatterie nach Anspruch 1, wobei die Beschichtungslage (12, 22, 32, 42) zumindest auf einer Oberfläche der Elektrodenlage angeordnet ist, wobei die Oberfläche mit einem Separator (51) in Kontakt steht, wenn eine Lithiumionen-Sekundärbatterie gebildet ist.

3. Die Elektrode für eine Lithiumionen-Sekundärbatterie nach Anspruch 1, wobei die Beschichtungslage auf allen Oberflächen der Elektrodenlage angeordnet ist.

4. Die Elektrode für eine Lithiumionen-Sekundärbatterie nach einem der Ansprüche 1 bis 3, wobei der poröse Schaum ein Kupferschaum ist.

5. Die Elektrode für eine Lithiumionen-Sekundärbatterie nach einem der Ansprüche 1 bis 4, wobei die Elektrode für eine Lithiumionen-Sekundärbatterie eine negative Elektrode (30) ist.

6. Die Elektrode für eine Lithiumionen-Sekundärbatterie nach einem der Ansprüche 1 bis 3, wobei der Stromsammler ein Aluminiumschaum ist.

7. Die Elektrode für eine Lithiumionen-Sekundärbatterie nach einem der Ansprüche 1 bis 3 und 6, wobei die Elektrode für eine Lithiumionen-Sekundärbatterie eine positive Elektrode (40) ist.

8. Lithiumionen-Sekundärbatterie, die eine positive Elektrode, eine negative Elektrode und einen zwischen der positiven Elektrode und der negativen Elektrode (30) angeordneten Separator aufweist,
wobei zumindest eine der positiven Elektrode (40) und der negativen Elektrode (30) die Elektrode für eine Lithiumionen-Sekundärbatterie nach einem der Ansprüche 1 bis 7 ist.

9. Die Lithiumionen-Sekundärbatterie nach Anspruch 8, wobei die negative Elektrode (30) einen negativen Elektrodensammler aufweist, der ein aus Metall hergestellter poröser Schaum ist, und eine negative Elektrodenlage (31), die den mit einem negativen Elektrodengemisch gefüllten negativen Elektrodensammler aufweist,
die negative Elektrodenlage eine poröse negative Elektrodenbeschichtungslage aufweist, und die negative Elektrodenbeschichtungslage auf allen Oberflächen der negativen Elektrodenlage angeordnet ist.

10. Die Elektrode für eine Lithiumionen-Sekundärbatterie nach Anspruch 9, wobei die positive Elektrode (40) einen positiven Stromsammler aufweist, der ein aus Metall hergestellter poröser Schaum ist, und eine positive Elektrodenlage (41), die den mit einem positiven Elektrodengemisch gefüllten positiven Stromsammler aufweist,
die positive Elektrodenlage eine poröse positive Elektrodenbeschichtungslage aufweist, und die positive Elektrodenbeschichtungslage auf einer Oberfläche in Kontakt mit dem Separator in der positiven Elektrodenlage angeordnet ist.

## Revendications

1. Électrode pour une batterie secondaire au lithium-ion,
comprenant un collecteur de courant qui est une mousse poreuse constituée de métal, et une couche d'électrode (11, 21, 31, 41) comprenant le collecteur de courant rempli d'un mélange d'électrode,
dans laquelle la couche d'électrode comprend une couche de revêtement (12, 22, 32, 42) poreuse,
la couche de revêtement est formée d'au moins l'un parmi le noir de carbone et le charbon actif, et
la couche de revêtement possède une épaisseur de 1 à 20 µm lorsqu'elle est comprise dans l'électrode négative et de 1 à 10 µm lorsqu'elle est comprise dans l'électrode positive.

2. Électrode pour une batterie secondaire au lithium-ion selon la revendication 1, dans laquelle la couche de revêtement (12, 22, 32, 42) est disposée au moins sur une surface de la couche d'électrode, la surface étant en contact avec un séparateur (51) lorsqu'une batterie secondaire au lithium-ion est formée.

3. Électrode pour une batterie secondaire au lithium-ion selon la revendication 1, dans laquelle la couche de revêtement est disposée sur toutes les surfaces dans la couche d'électrode.

4. Électrode pour une batterie secondaire au lithium-ion selon l'une quelconque des revendications 1 à 3, dans laquelle la mousse poreuse est une mousse de cuivre.

5. Électrode pour une batterie secondaire au lithium-ion selon l'une quelconque des revendications 1 à 4, dans laquelle l'électrode pour une batterie secondaire au lithium-ion est une électrode négative (30).

6. Électrode pour une batterie secondaire au lithium-ion selon l'une quelconque des revendications 1 à 3, dans laquelle le collecteur de courant est une mousse d'aluminium.

7. Électrode pour une batterie secondaire au lithium-ion selon l'une quelconque des revendications 1 à 3 et 6, dans laquelle l'électrode pour une batterie secondaire au lithium-ion est une électrode positive (40).

8. Batterie secondaire au lithium-ion comprenant une électrode positive, une électrode négative, et un séparateur situé entre l'électrode positive et l'électrode négative (30),
dans laquelle au moins l'une parmi l'électrode positive (40) et l'électrode négative (30) est l'électrode pour une batterie secondaire au lithium-ion selon l'une quelconque des revendications 1 à 7.

9. Batterie secondaire au lithium-ion selon la revendication 8,
dans laquelle l'électrode négative (30) comprend un collecteur d'électrode négative qui est une mousse poreuse constituée de métal, et une couche d'électrode négative (31) comprenant le collecteur d'électrode négative rempli d'un mélange d'électrode négative,
la couche d'électrode négative possède une couche de revêtement d'électrode négative poreuse, et
la couche de revêtement d'électrode négative est disposée sur toutes les surfaces dans la couche d'électrode négative.

10. Électrode pour une batterie secondaire au lithium-ion selon la revendication 9,
dans laquelle l'électrode positive (40) comprend un collecteur de courant positif qui est une mousse poreuse constituée de métal, et une couche d'électrode positive (41) comprenant le collecteur de courant positif rempli d'un mélange d'électrode positive,
la couche d'électrode positive possède une couche de revêtement d'électrode positive poreuse, et
la couche de revêtement d'électrode positive est disposée sur une surface en contact avec le séparateur dans la couche d'électrode positive.
